# EUROPEAN PATENT APPLICATION

(11) **EP 4 579 243 A1**
(43) Date of publication of application: **02.07.2025**
(21) Application number: 23857082.4
(22) Date of filing: 25.07.2023
(51) Int. Cl.: G01N 35/00

(54) **AUTOMATIC ANALYSIS DEVICE**

(30) Priority: 26.08.2022 JP 2022135357
(71) Applicant: HITACHI HIGH-TECH CORPORATION, Tokyo 105-6409 (JP)
(72) Inventor: SHIOTA, Yohei, Tokyo 105-6409 (JP); KON, Misaki, Tokyo 105-6409 (JP); YOKOYAMA, Koki, Tokyo 105-6409 (JP)
(74) Representative: Strehl & Partner mbB
(86) International application number: PCT/JP2023/027259
(87) International publication number: WO 2024/042966

(57) **Abstract**

In an automatic analyzer 1, a duct 140 provided in the automatic analyzer 1 includes a guide portion that guides air, which flows into a heat sink 120 at a predetermined angle due to a change in the flow direction between an intake port 130 and the heat sink 120, such that the air flows to a side of the heat sink 120 closest to a Peltier element 110. Accordingly, an automatic analyzer including a reagent storage capable of improving the cooling efficiency as compared with the related art is provided.

## Description

### Technical Field

The present invention relates to an automatic analyzer.

### Background Art

PTL 1 discloses a technique of circulating air in a reagent storage using a fan.

### Citation List

### Patent Literature

PTL 1: JP2021-128049A

### Summary of Invention

### Technical Problem

In PTL 1, a limitation on volume that can be used for a configuration required for cooling the reagent storage in a small-sized automatic analyzer having a small housing is not considered.

The present invention provides an automatic analyzer including a reagent storage capable of improving cooling efficiency as compared with the related art.

### Solution to Problem

The invention includes a plurality of means for solving the above problems, and an example thereof includes: a reagent storage configured to store a plurality of reagent containers; a cooling portion configured to cool an inside of the reagent storage; a heat dissipation portion configured to release heat generated in cooling the cooling portion; an intake port configured to take in air to be supplied to the heat dissipation portion from an outside; an exhaust port configured to discharge the air to the outside after the air being supplied to the heat dissipation portion; and a duct that guides the air from the intake port to the heat dissipation portion and guides the air after heat exchange with the heat dissipation portion to the exhaust port. The duct includes a guide portion that guides the air, which flows into the heat dissipation portion at a predetermined angle due to a change in a flow direction of the air between the intake port and the heat dissipation portion, such that the air flows to a side of the heat dissipation portion closest to the heat cooling portion.

### Advantageous Effects of Invention

According to the invention, the cooling efficiency can be improved as compared with the related art. Problems, configurations, and effects other than those described above will be clarified by description of the following embodiments.

### Brief Description of Drawings

[FIG. 1] FIG. 1 is a diagram illustrating an outline of an automatic analyzer.
[FIG. 2] FIG. 2 is a partial cross-sectional view illustrating an example of a shape of a duct.
[FIG. 3] FIG. 3 is a partial cross-sectional view illustrating another example of the shape of the duct.

### Description of Embodiments

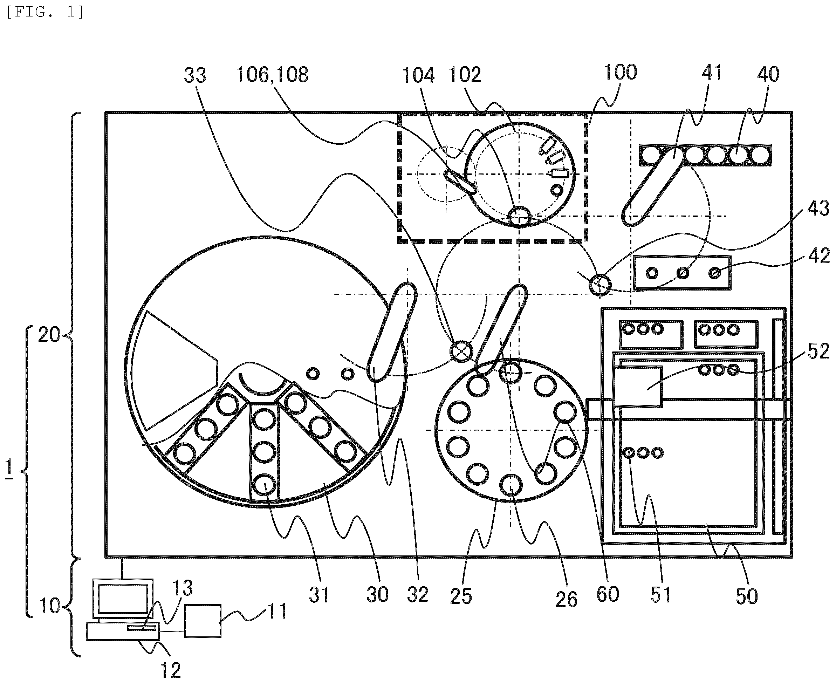

Hereinafter, an embodiment of an automatic analyzer will be described with reference to FIGS. 1 to 3. In the drawings used in the present specification, the same or corresponding components are denoted by the same or similar reference signs, and a repeated description of these components may be omitted.

First, an overall configuration of the automatic analyzer will be described with reference to FIG. 1. FIG. 1 is a diagram illustrating an outline of the configuration of the automatic analyzer.

An automatic analyzer 1 includes a control unit 10 and an analytical operation unit 20. The automatic analyzer 1 has a function of storing a plurality of reagent containers 31 along an inner side of an outer peripheral wall of a cylindrical reagent storage 30 rotatably supported around a vertical axis, aspirating a predetermined amount of a predetermined reagent from the corresponding reagent container 31 by a dispensing pipette, and supplying the predetermined reagent to a biological specimen such as blood or urine dispensed into a reaction container 51 to perform analysis.

First, a transport path of a specimen to be analyzed will be described.

The specimen to be analyzed is moved in the automatic analyzer 1 by a specimen transport mechanism (omitted for convenience of illustration) such as a belt conveyor or a rack handler in a state of being contained in a specimen container 40, and is transported to a specimen dispensing mechanism 41 to be dispensed that includes a dispensing pipette for dispensing the specimen.

A plurality of reaction containers 51 are supplied into the automatic analyzer 1 in a state of being placed in a storage portion 50 that stores unused reaction containers.

After the reaction containers 51 are gripped one by one by a first transport mechanism 52 that transports the reaction containers from the storage portion 50, the reaction containers 51 are lifted and moved to a buffer 42 (a specimen discharge position of the specimen dispensing mechanism 41), and are also moved to a gripping position 43 that is a position for gripping the reaction containers 51 on the buffer 42. In order to enable such movement, the first transport mechanism 52 is configured to move in an X-axis direction (a left-right direction in FIG. 1), a Y-axis direction (a front-rear direction in FIG. 1), and a Z-axis direction (an up-down direction in FIG. 1).

A disk-shaped incubator 25 rotatably supported around a vertical central shaft includes a plurality of placement parts 26 for locking the plurality of reaction containers 51 on the circumference in the vicinity of an outer periphery, and each reaction container 51 can be moved to a predetermined position by rotating the incubator 25.

Next, the specimen dispensing mechanism 41 moves to a region above the specimen container 40, aspirates the specimen, moves to a region above the reaction container 51 on the buffer 42, and discharges the specimen into the reaction container 51. Thereafter, the specimen dispensing mechanism 41 cleans a nozzle of the dispensing pipette by a cleaning mechanism (not illustrated). When a replaceable tip is used instead of the nozzle, the tip may be replaced by a replacement mechanism (not illustrated).

Next, a transport path of a reagent to be added to the specimen in the reaction container 51 will be described.

A second transport mechanism 60 is configured to move circularly in a range covering the buffer 42, the gripping position 43, a reagent discharging position 33 of a reagent dispensing mechanism 32, the placement part 26 on the incubator 25, and a B/F separation unit 104 of an analysis unit 100, as a movement range thereof.

The reagent storage 30 having a cylindrical shape and a cavity inside, which is rotatably supported around a vertical central shaft, forms a reagent holding portion 34 in which a plurality of reagent containers 31 are held radially along a housing 38 of the inner cavity. Some reagent containers 31 also contain a reagent containing a large number of magnetic particles for agitation. Details of the structure will be described below.

The reagent dispensing mechanism 32 is configured to aspirate the reagent in the reagent container 31 and move to a predetermined position. First, the reagent dispensing mechanism 32 moves to a region above the reagent container 31 on the reagent storage 30 to aspirate a predetermined amount of reagent, and then moves to a region above the reaction container 51 disposed at the reagent discharging position 33 set around the incubator 25 to discharge the reagent into the reaction container 51.

A first agitation mechanism (not illustrated) capable of agitating the reagent is provided above the reagent storage 30. The first agitation mechanism is provided with an agitation arm (also referred to as a stirrer) capable of rotating around a vertical axis and agitating magnetic particles. The agitation arm moves to a region above the reagent container 31 containing the reagent to be agitated containing the magnetic particles, lowers, for example, a paddle-like or spiral agitation blade provided at a lower end of the agitation arm into the reagent, and rotates the agitation blade to agitate a magnetic particle solution. In order to prevent the magnetic particles in the solution from naturally precipitating, the agitation arm agitates the magnetic particles immediately before the reagent is dispensed. After the agitation, the agitation arm lifts to above the reagent container 31, moves to a region above the cleaning mechanism containing a cleaning liquid, lowers into the cleaning liquid, and then rotates the agitation blade to remove the magnetic particles adhering to the agitation blade.

After a predetermined reaction time elapses since the specimen and the predetermined reagent are dispensed, a reaction liquid is formed. The reaction container 51 containing the reaction liquid is moved to the B/F separation unit 104 of the analysis unit 100 by the second transport mechanism 60.

The B/F separation unit 104 is a mechanism that separates the reaction liquid containing no magnetic particles and the magnetic particles by magnetically attracting the magnetic particles to an inner wall of the reaction container 51 by a magnet 105, the magnetic particles containing a substance that is immunologically bound to a measurement object present in the reaction liquid in the reaction container 51 transported by the second transport mechanism 60.

A reaction liquid aspiration nozzle 106 is configured to rotate and move in the up-down direction, moves to above the reaction container 51 on the B/F separation unit 104 for which a predetermined time elapses, and descends to aspirate the reaction liquid not containing the magnetic particles in the reaction container 51.

A displacement liquid discharge nozzle 108 is configured to rotate and move in the up-down direction, moves to above the reaction container 51 on the B/F separation unit 104 from which the reaction liquid containing no magnetic particles is aspirated, and descends to discharge a buffer solution into the reaction container 51.

A second agitation mechanism (not illustrated) mixes the magnetic particles and the buffer solution in the reaction container by applying a rotational motion in the reaction container 51. The reaction container 51 after mixing is transported to below a measurement channel introduction nozzle by a rotation operation of a turntable 102.

The measurement channel introduction nozzle (not illustrated) is a nozzle that can rotate and move in the up-down direction, and aspirates the reaction liquid in the reaction container 51 to feed the reaction liquid to a photometry unit.

The photometry unit (not illustrated) detects a concentration of a detection object in the reaction liquid aspirated and fed from the measurement channel introduction nozzle.

Next, the reaction container 51 holding the analyzed reaction liquid is moved, by the first transport mechanism 52, to a region above a disposal port (not illustrated) for disposing of the reaction container, and is disposed of to the disposal port.

The automatic analyzer 1 illustrated in FIG. 1 can efficiently analyze a plurality of specimens for a plurality of analysis items by combining or repeating the above operations.

In the automatic analyzer 1, the mechanisms described above are referred to as the analytical operation unit 20.

Further, the automatic analyzer 1 includes, in addition to the analytical operation unit 20, the control unit 10 that controls an operation of each device in the automatic analyzer 1. The control unit 10 includes an operation unit 11, a processing unit 12, and a storage unit 13.

The processing unit 12 includes, for example, a hardware substrate and a computer, and the storage unit 13 such as a hard disk is built in the processing unit 12.

The storage unit 13 stores, for example, control parameters corresponding to respective units, sample information regarding various samples, and the like.

The processing unit 12 may be implemented as hardware by a dedicated circuit board, or may be implemented by software executed by a computer. When implementing by hardware, the processing unit can be implemented by integrating a plurality of arithmetic units that execute processing on a wiring board, or in a semiconductor chip or package. When implementing by software, the processing unit can be implemented by mounting a high-speed general-purpose CPU on a computer and executing a program for executing desired arithmetic processing. It is also possible to upgrade an existing device by a recording medium in which the program is recorded. These devices, circuits, and computers are connected by a wired or wireless network, and data is transmitted and received as appropriate.

The operation unit 11 includes a display unit that is a display and an input unit such as a mouse and a keyboard. The display unit displays various types of information on the automatic analyzer 1 stored in the storage unit 13.

The above is the configuration of the automatic analyzer 1.

Although the configuration of the automatic analyzer is described with reference to the case where a photometric unit for analyzing immunoassay as illustrated in FIG. 1 is mounted, the configuration of the automatic analyzer to which the invention is applied is not limited thereto. For example, the invention can also be applied to an automatic analyzer that includes, in addition or instead, a detection unit for biochemical analysis, a detection unit for biochemical analysis and a detection unit for immunoassay, or a detection unit for other analysis items.

Further, the automatic analyzer is not limited to the form of a single analysis module configuration as illustrated in FIG. 1, and may be implemented such that two or more analysis modules capable of measuring various same or different analysis items or preprocessing modules for performing preprocessing are connected by a transport device.

Here, it is necessary to cool an inside of the reagent storage used in the automatic analyzer in order to restrict deterioration of the reagent. Therefore, a cooling portion including, for example, a Peltier element and a heat dissipation portion including, for example, a heat sink connected to the cooling portion are provided.

In the reagent storage, due to the restriction posed by the arrangement of its rotation shaft, it is necessary to take in air from below and direct the air straight sideways, and then to apply cooling air to the heat dissipation portion. However, when a duct is structured in a shape in which the cooling air is simply guided to the heat dissipation portion, the flow may be disturbed at a portion where a flow direction of the cooling air changes in angle, a difference may occur in supply amount of the cooling air when a cross section of the duct in the flow direction is viewed, and there may be a portion where cooling efficiency decreases. Therefore, it is desirable to stabilize the supply amount of the cooling air.

In particular, when a heat sink is used in the heat dissipation portion, it is desirable to apply cooling air to a fin base having a high temperature (hereinafter, referred to as a base part), but since it is difficult to supply the cooling air to the base part, it is required to more effectively pass the cooling air. Further, in a small-sized automatic analyzer having a small housing, a volume that can be used for the configuration required for cooling the reagent storage is greatly limited.

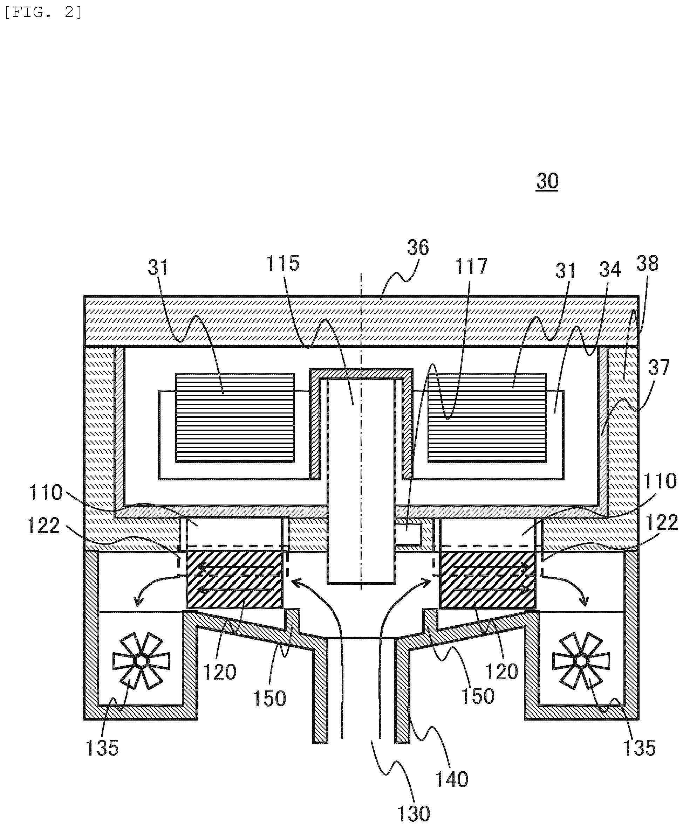

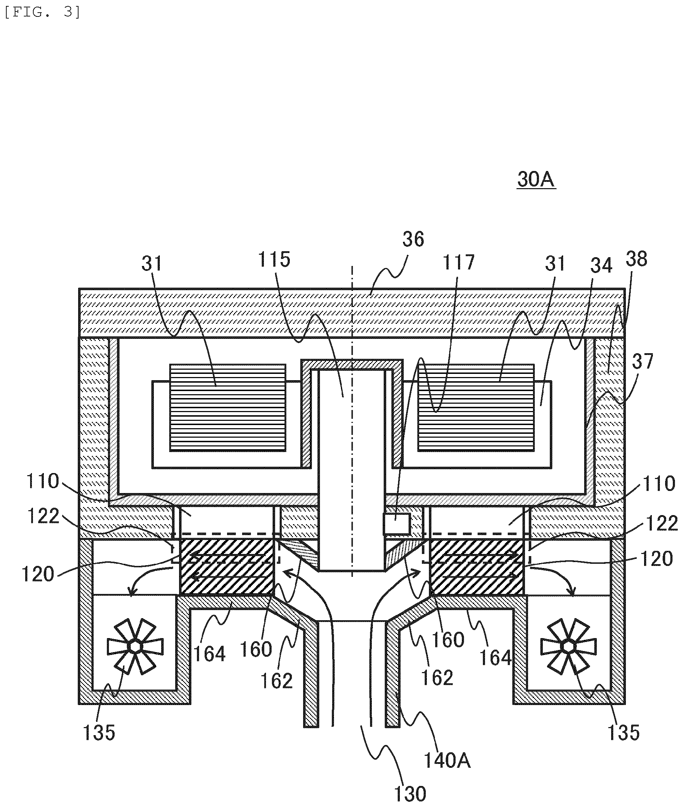

As a structure for solving the above problem, details of the reagent storage 30 in the automatic analyzer 1 will be described with reference to FIGS. 2 and 3. FIG. 2 is a partial cross-sectional view illustrating an example of a shape of a duct that guides cooling air in the reagent storage. FIG. 3 is a partial cross-sectional view illustrating another example of the shape of the duct.

The reagent storage 30 illustrated in FIG. 2 moves a predetermined reagent container 31 to a reagent dispensing position by rotating a rotation shaft 115 by a drive motor 117.

In the reagent storage 30, in order to ensure properties of a reagent stored therein, it is necessary to control the reagent container 31 to a fixed temperature, and thus the reagent storage 30 has a heat insulating function. This heat insulating function is ensured by a lid 36 and the housing 38 being implemented by heat insulating members, or by the heat insulating members being provided inside the lid 36 and the housing 38.

The inside of the reagent storage 30 is cooled by cooling a cooling jacket 37 by the Peltier element (cooling portion) 110. Although FIG. 2 illustrates a mode in which the cooling efficiency is increased by providing a plurality of Peltier elements 110, one Peltier element 110 may be provided. The cooling portion is not limited to the Peltier element 110, and may be water cooling or the like.

Here, at the Peltier element 110, since a heat transfer surface opposite to a heat transfer surface in contact with the cooling jacket 37 generates heat, the heat sink (heat dissipation portion) 120 is brought into contact with the heat transfer surface to release the heat generated in cooling the Peltier element 110. In this way, by dissipating heat by the heat sink 120, it is possible to efficiently dissipate heat without a drive unit. A shape of the heat sink 120 is not particularly limited as long as the heat sink 120 has a shape capable of releasing heat generated in cooling the Peltier element 110. In the heat sink 120, a region on a side close to the Peltier element 110 is a base part 122 that particularly needs to be cooled.

Although the heat sink 120 is air-cooled, an intake port 130 for taking in cooling air to be supplied to the heat sink 120 from the outside of the automatic analyzer 1 is provided on a lower side of the housing of the automatic analyzer 1.

An exhaust port 135 for discharging the air after being supplied to the heat sink 120 to the outside is provided downstream of each heat sink 120 on, for example, a side surface on a rear surface side of the housing of the automatic analyzer 1.

A duct 140 is provided in order to guide air from the intake port 130 to the heat sink 120 and guide air after heat exchange with the heat sink 120 to the exhaust port 135.

The duct 140 is branched to supply air to each of two heat sinks 120. In addition, due to a housing space of the automatic analyzer 1, the flow direction of air changes between the intake port 130 and the heat sink 120.

In the duct 140, in particular, in order to efficiently supply the air to the base part 122, it is necessary to guide the air, which flows into the heat sink 120 at a predetermined angle due to a change in the flow direction, such that the air flows to the side of the heat sink 120 closest to the Peltier element 110. Therefore, the duct 140 is provided with a guide portion. In FIG. 2, as the guide portion, a plate member 150 perpendicular to a direction in which the air flows in and parallel to a vertical direction is provided in front of an opening portion for receiving the inflow air by a predetermined distance.

With the plate member 150, turbulence of an air flow, which is caused when the air taken in from the intake port 130 collides with the rotation shaft 115 and the flow direction is changed from the vertical direction to a substantially horizontal direction, is reduced so that it is possible to stably supply cooling air for sufficiently cooling the base part 122 of the heat sink 120. Therefore, it is possible to avoid a decrease in the cooling efficiency of the Peltier element 110.

A duct 140A in a reagent storage 30A illustrated in FIG. 3 is also branched to supply air to each of the two heat sinks 120, and is also provided with a guide portion since the duct 140A is the same as the duct 140 in the reagent storage 30 illustrated in FIG. 2 in that the flow direction of air changes between the intake port 130 and the heat sink 120.

In FIG. 3, as the guide portion, there are provided a first region 160, 162 that has a bottom surface inclined upward in an oblique direction from an opening portion for receiving inflow air and a second region 164 that is continuous with the first region 160, 162 and has a bottom surface parallel to the horizontal direction.

By the first region 160, 162, a contact surface of the heat sink 120 with the Peltier element 110, and the second region 164, turbulence of an air flow, which is caused when the air taken in from the intake port 130 collides with the rotation shaft 115 and the flow direction is changed from the vertical direction to the substantially horizontal direction, is reduced so that it is possible to stably supply cooling air for sufficiently cooling the base part 122 of the heat sink 120. Therefore, it is possible to avoid a decrease in the cooling efficiency of the Peltier element 110.

Next, effects of the embodiment will be described.

The duct 140 of the automatic analyzer 1 described above has a guide portion that guides air, which flows into the heat sink 120 at a predetermined angle due to a change in the flow direction between the intake port 130 and the heat sink 120, such that the air flows to the side of the heat sink 120 closest to the Peltier element 110.

In a case where there is a portion where a flow angle of cooling air changes, it is possible to avoid the occurrence of a portion where the cooling efficiency decreases due to a difference in supply amount of the cooling air when viewing a cross section of the duct in the flow direction, and the cooling air can be applied to the entire heat dissipation portion, particularly the base part 122, without increasing a pressure loss, so that the cooling efficiency can be improved as compared with that in the related art.

### <Others>

The invention is not limited to the embodiment described above, and various modifications and applications are possible. The embodiments described above are described in detail for easy understanding of the invention, and are not necessarily limited to those having all the configurations described above.

### Reference Signs List

- 1:: automatic analyzer
- 10:: control unit
- 11:: operation unit
- 12:: processing unit
- 13:: storage unit
- 20:: analytical operation unit
- 25:: incubator
- 26:: placement part
- 30, 30A:: reagent storage
- 31:: reagent container
- 32:: reagent dispensing mechanism
- 33:: reagent discharging position
- 34:: reagent holding portion
- 36:: lid
- 37:: cooling jacket
- 38:: housing
- 40:: specimen container
- 41:: specimen dispensing mechanism
- 42:: buffer
- 43:: gripping position
- 50:: storage portion
- 51:: reaction container
- 52:: first transport mechanism
- 60:: second transport mechanism
- 100:: analysis unit
- 102:: turntable
- 104:: B/F separation unit
- 105:: magnet
- 106:: reaction liquid aspiration nozzle
- 108:: displacement liquid discharge nozzle
- 110:: Peltier element (cooling portion)
- 115:: rotation shaft
- 117:: drive motor
- 120:: heat sink (heat dissipation portion)
- 122:: base part
- 130:: intake port
- 135:: exhaust port
- 140, 140A:: duct
- 150:: plate member (guide portion)
- 160, 162:: first region (guide portion)
- 164:: second region (guide portion)

## Claims

1. An automatic analyzer comprising:
a reagent storage configured to stores a plurality of reagent containers;
a cooling portion configured to cool an inside of the reagent storage;
a heat dissipation portion configured to release heat generated in cooling the cooling portion;
an intake port configured to take in air to be supplied to the heat dissipation portion from an outside;
an exhaust port configured to discharge the air to the outside after the air being supplied to the heat dissipation portion; and
a duct that guides the air from the intake port to the heat dissipation portion and guides the air after heat exchange with the heat dissipation portion to the exhaust port, wherein
the duct includes a guide portion that guides the air, which flows into the heat dissipation portion at a predetermined angle due to a change in a flow direction of the air between the intake port and the heat dissipation portion, such that the air flows to a side of the heat dissipation portion closest to the heat cooling portion.

2. The automatic analyzer according to claim **1,** wherein
the heat dissipation portion is a heat sink.

3. The automatic analyzer according to claim 2, wherein
the guide portion includes a plate member perpendicular to a direction in which the air flows in and parallel to a vertical direction, in front of an opening portion for receiving the inflow air by a predetermined distance.

4. The automatic analyzer according to claim 2, wherein
the guide portion includes a first region that has a bottom surface inclined upward in an oblique direction from an opening portion for receiving the inflow air, and a second region that is continuous with the first region and has a bottom surface parallel to a horizontal direction.

5. The automatic analyzer according to claim 1, wherein
a plurality of the cooling portions are provided.
